# EUROPEAN PATENT APPLICATION

(11) **EP 1 898 370 A2**
(43) Date of publication of application: **12.03.2008**
(21) Application number: 07116038.6
(22) Date of filing: 10.09.2007
(51) Int. Cl.: G07F 7/10, G06F 21/00

(54) **IC card, and access control method**

(30) Priority: 11.09.2006 JP 2006245447
(71) Applicant: MATSUSHITA ELECTRIC INDUSTRIAL CO., LTD, Kadoma-shi, Osaka 571-8501 (JP)
(72) Inventor: Takagi, Nobuya Matsushita Electric Industrial Co., Ltd I.P.R.O.C., Chuo-ku, Osaka 540-6207 (JP)
(74) Representative: Eisenführ, Speiser & Partner

(57) **Abstract**

A key number that is assigned to a fixed key stored in a nonvolatile memory of an IC card is virtually assigned to a temporary key, and this key number is included in a public key certificate, and further, this key number is used as a security attribute for setting an access authority, whereby information relating to the fixed key and information relating to the temporary key are combined and specified. Thereby, it is possible to perform access control comprising different two authentication methods, i.e., authentication by password collation or secret key encryption and authentication by public key encryption.

## Description

### FIELD OF THE INVENTION

The present invention relates to an IC card, and an access control method for controlling access to a file or the like that is stored in the IC card.

### BACKGROUND OF THE INVENTION

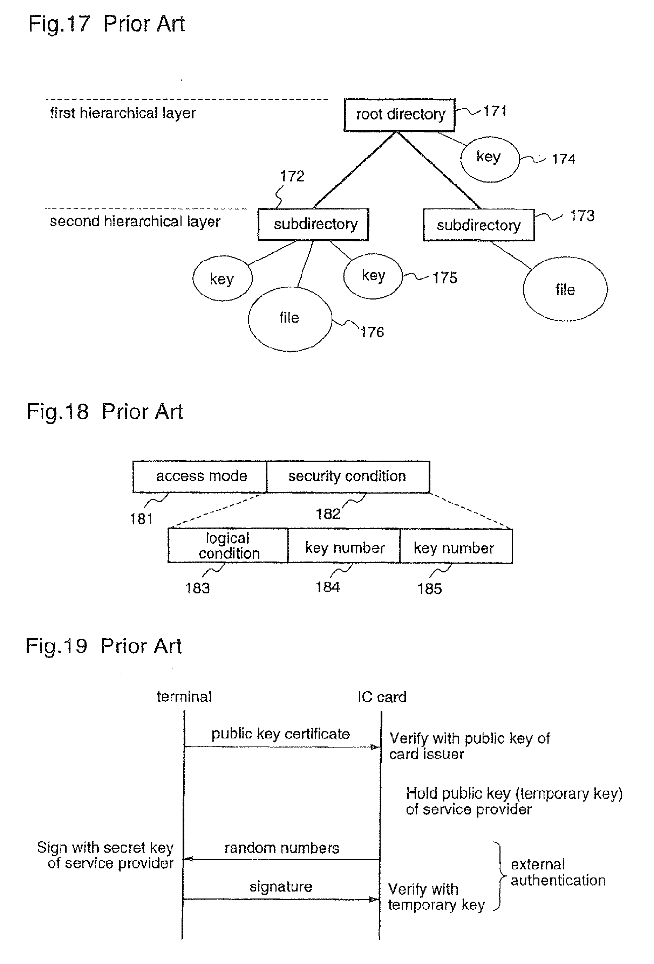

In recent years, IC cards are coming into practical use as high security devices to replace magnetic cards. IC cards have nonvolatile memories wherein files, passwords, and the like can be stored. Generally, a file construction of an IC card has a hierarchical structure as shown in figure 17. Figure 17 shows the case where the file construction of the IC card has two hierarchical layers. In figure 17, plural files and plural keys (passwords and secret keys) can be provided immediately beneath each directory, although simplified in figure 17.

Each file has a security attribute as shown in figure 18. The security attribute shows conditions to be satisfied for accessing the corresponding file. In an access mode 181, information for identifying the type of access to the corresponding file, such as "read" or "write", is stored. In a security condition 182, information relating to keys to be authenticated in advance of execution of the access (e.g., "read") specified in the access mode 181 is stored. A logical condition 183 indicates a combination condition of keys when the security condition 182 has information relating to plural keys, and either an AND logic (all the keys need to be authenticated) or an OR logic (one of the keys needs to be authenticated) is set. Further, each key is specified by a key number, and figure 18 shows the case where the security condition 182 includes information relating to two keys. The key number is not key data such as a password but information for identifying the key. For example, assuming that maximum eight keys can be set in the IC card, key numbers from 1 to 8 are assigned to the respective keys. The key numbers are assigned without overlapping each other in the IC card so that the respective keys can be uniquely specified by the key numbers.

A security attribute setting method will be specifically described hereinafter. For example, when reading a file 176 in the second hierarchy layer shown in figure 17, if both a key 174 and a key 175 need to be authenticated, information for identifying a read command is set in the access mode 181, and "AND logic" is set in the logical condition 183. Further, when "1" and "3" are assigned as key numbers of the key 174 and the key 175, respectively, "1" and "3" are set in a key number 184 and key number 185, respectively.

While there are several methods for key authentication, the simplest method is to simply compare key data supplied from the terminal with key data stored in the IC card. This method corresponds to verification of a password of the IC card owner. Further, as an authentication method with higher security, there is a method utilizing a secret key encryption system. In this method, the IC card and the terminal share the same secret key, and perform the same encryption for random numbers generated by the IC card, and then the IC card compares the results of the encryption. Since it is considered that the terminal has the same secret key as that of the IC card when the compared results are the same, this terminal is judged as a valid one. In either method, keys (passwords or secret keys) are fixedly stored in the nonvolatile memory, and the security attribute is constituted by specifying these keys (hereinafter these keys are generically referred to as "fixed keys").

On the other hand, when performing authentication using a public key encryption system, the situation considerably differs from above. An authentication procedure using the public key encryption method will be described with reference to figure 19. Initially, the terminal which provides a service to the IC card owner sends its own public key certificate to the IC card. This public key certificate has previously been issued from the card issuer, and includes a signature to the public key of the service provider by the secret key of the card issuer. The IC card has a public key that is paired with the secret key of the card issuer, and verifies the signature included in the received public key certificate by using this public key. When the signature is valid, the IC card takes the public key of the service provider from the public key certificate, and stores this as a temporary public key (hereinafter referred to as "temporary key") in a volatile memory in the IC card.

Next, the IC card performs external authentication with the obtained temporary key. In this external authentication, the IC card sends the random numbers generated by the IC card to the terminal, and verifies the electronic signature which is made by the secret key of the service provider and is returned from the terminal, by using the previously obtained temporary key, thereby to confirm the validity of the terminal.

As described above, in the authentication using the public key encryption method, not the fixed key stored in the nonvolatile memory of the IC card but the temporary key stored in the volatile memory is used. Since the temporary key is a key to be temporarily stores and has neither a hierarchical layer number nor a key number, the structure of the security attribute shown in figure 18 cannot be applied to the temporary key. Although the public key of the card issuer is the fixed key stored in the nonvolatile memory of the IC card 1, since this public key is well used also for verifications of public key certificates other than the certificate for the public key of the service provider that manages the terminal, it is not suitable for access control.

Generally, as a method for performing access control with a system using the public key encryption method, a method using an attribute certificate indicating an access authority has been known. There are Patent Document 1 (Japanese Published Patent Application No. 2003-316655 (Fig.3)) and Patent Document 2 (Japanese Published Patent Application No. 2004-247799 (Fig.9)) as examples that apply this method to an IC card system. Patent Document 1 provides a method in which, in access control information in an IC card, an ID of an access subject who is allowed to make access is given to each application or data, or each command function, to include this ID in a public key certificate, whereby the IC card can specify the range where access is allowed. Further, Patent Document 2 provides a method which can flexibly respond to a change in an access authority by specifying a command function or access target data in access control information included in a public key certificate.

In the actual IC card key system, however, there are many cases where access control that combines authentication by password collation or secret key encryption with authentication by public key encryption must be performed. For example, there is a case where, in order to access a certain file, both of personal identification by password and terminal authentication by public key encryption are required. Accordingly, a structure of security attribute that can realize combination of these authentications is required.

Further, there are many cases where the authentication by password collation or secret key encryption adopts a security structure corresponding to a hierarchy structure of files in the IC card, and therefore, it is desired that the authentication by public key encryption is also adaptable to such security structure. Furthermore, the authentication by password collation or secret key encryption has a function of recording the number of collation errors, and also the authentication by public key encryption is required to introduce this conception to enhance the security.

### SUMMARY OF THE INVENTION

In order to solve the above-mentioned problems, according to the present invention, there is provided an access control method for controlling access to a file in an IC card, wherein the IC card has a fixed key in a nonvolatile memory; a terminal sends, to the IC card, a public key certificate in which its own public key is signed by a secret key of a card issuer; the IC card verifies the validity of the public key certificate received from the terminal, and thereafter, takes the public key out of the public key certificate, and stores the public key as a temporary key in a volatile memory in the IC card; a file in the IC card has fixed key reference information for referring to the fixed key, and temporary key reference information for referring to the temporary key; and the IC card judges whether access to the file in the IC card is allowable or not, on the basis of at least the fixed key reference information, and the temporary key reference information.

Therefore, it is possible to perform access control comprising different two authentication methods, i.e., authentication by password collation or secret key encryption, and authentication by public key encryption.

Further, the public key certificate includes a first key number that is virtually assigned to the temporary key and a result of authentication using the temporary key is referred to according to the first key number stored in the temporary key reference information, while a second key number is assigned to the fixed key and a result of authentication using the fixed key is referred to according to the second key number stored in the fixed key reference information, and different values are assigned to the first key number and the second key number, respectively, thereby discriminating the fixed key and the temporary key from each other. Therefore, a special means for distinguishing between the fixed key reference information and the temporary key reference information is not required, thereby realizing a simple and flexible construction.

Further, the storage positions of the fixed key reference information and the temporary key reference information are fixed, thereby discriminating the fixed key and the temporary key from each other. Therefore, it is possible to distinguish between the fixed key and the temporary key according to the storage positions, and thereby the key numbers can be overlapped between the fixed key and the temporary key, resulting in an increase in the number of keys that can be used for access control.

Further, different identifiers are assigned to the fixed key reference information and the temporary key reference information, respectively, thereby discriminating the fixed key and the temporary key from each other. Therefore, an arbitrary number of fixed key reference information and an arbitrary number of temporary key reference information can be provided, thereby realizing more flexible access control.

Further, the file in the 1C card has a hierarchical structure, and the temporary key reference information has information relating to the number of stages of the public key certificate. Therefore, in the case of performing authentication by the public key encryption method, access control corresponding to the hierarchical structure of the file can be realized.

Further, the file in the IC card as a hierarchical structure, and the temporary key reference information has information relating to hierarchical layer numbers of the hierarchical structure. Therefore, impersonation between service providers can be avoided.

Further, the temporary key reference information includes information indicating whether an authentication result obtained by a public key encryption method should be reflected to access control or not. Therefore, it is possible to flexibly respond to a change in the access authority relating to authentication using the temporary key.

Further, the public key certificate has directory identification information, and the IC card performs normal processing when the currently selected directory is a directory that is indicated by the directory identification information in the public key certificate. Therefore, it is possible to prevent dishonest impersonation by the service provider.

Further, the public key certificate has a plurality of directory identification information, and the IC card performs normal processing when a directory which is indicated by each of the plural directory identification information is a directory that is positioned on a branch connecting a root directory and the currently selected directory. Therefore, access authority information relating to plural directories can be put together in a public key certificate to be transmitted to the IC card, thereby enhancing the transmission efficiency.

Further, the public key certificate has one file identification information to which a plurality of command identification information are connected. Therefore, the transmission efficiency can be enhanced when plural accesses (e.g., read and write) to one file are allowed.

Further, the public key certificate has one command identification information to which a plurality of file identification information are connected. Therefore, the transmission efficiency can be enhanced when one access (e.g., read) is allowed to plural files.

Further, the public key certificate includes a first key number that is virtually assigned to the temporary key, and at least one directory stored in the IC card has number-of-collations management information corresponding to the first key number. Therefore, a target key can be identified according to the key number, and thereby the number of collations for each temporary key can be managed.

Further, according to the present invention, there is provided an access control method for controlling access to a file in an IC card, wherein the IC card has a fixed key in a nonvolatile memory; a terminal sends, to the IC card, information which is obtained by signing access control information for referring to the fixed key; and the IC card verifies the validity of the signed information that is received from the terminal, and thereafter, takes the access control information from the signed information, and judges whether access to the file is allowable or not, on the basis of at least the access control information.

Therefore, the information relating to the security attribute, which has conventionally been stored in the nonvolatile memory of the IC card, is transmitted from the terminal to the IC card, thereby realizing flexible response to a change in the access authority relating to authentication by password collation or secret key encryption.

Further, the IC card has absolute access authority information stored in the nonvolatile memory, and access control is carried out on the basis of the absolute access authority information with a priority over the access control information. Therefore, even when the public key certificate including the access authority information is forged, required security can be ensured.

### EFFECTS OF THE INVENTION

According to an IC card and an access control method of the present invention, it is possible to perform access control comprising different two authentication methods, i.e., authentication by password collation or secret key encryption, and authentication by public key encryption, thereby realizing responses to various system conditions.

Further, access control corresponding to the hierarchical structure of files in the IC card can be performed also in the case of performing authentication by public key encryption, as in the case of performing authentication by password collation or secret key encryption.

Further, the number of collation errors can be recorded also in the case of performing authentication by public key encryption, as in the case of performing authentication by password collation or secret key encryption, thereby enhancing the security.

Furthermore, it is possible to flexibly respond to, not only a change in the access authority relating to authentication using the temporary key, but also a change in the access authority relating to authentication by password collation or secret key encryption.

### BRIEF DESCRIPTION OF THE DRAWINGS

Figure 1 is a block diagram illustrating an IC card system according to a first embodiment of the present invention.
Figure 2 is a diagram illustrating a logical structure of files and the like in an access control method according to the first embodiment.
Figure 3 is a diagram illustrating the structure of a security attribute according to the first embodiment.
Figure 4 is a diagram illustrating an access control procedure of the IC card system according to the first embodiment.
Figure 5 is a diagram illustrating the structure of another security attribute according to the first embodiment.
Figure 6 is a diagram illustrating the structure of a security attribute in an access control method according to a second embodiment of the present invention.
Figure 7 is a diagram illustrating an access control procedure of an IC card system according to the second embodiment.
Figure 8 is a diagram illustrating a logical structure of files and the like in an access control method according to a third embodiment of the present invention.
Figure 9 is a diagram illustrating the structure of a security attribute according to the third embodiment.
Figure 10 is a diagram illustrating the structure of a security attribute in an access control method according to a fourth embodiment of the present invention.
Figure 11 is a diagram illustrating an access control procedure of an IC card system according to the fourth embodiment.
Figure 12 is a diagram illustrating the structure of a public key certificate according to the fourth embodiment.
Figure 13 is a diagram illustrating the structure of another public key certificate according to the fourth embodiment.
Figure 14 is a diagram illustrating the structure of a directory in an access control method according to a fifth embodiment of the present invention.
Figure 15 is a diagram illustrating the structure of a public key certificate in an access control method according to a sixth embodiment of the present invention.
Figure 16 is a diagram illustrating the structure of a directory in the access control method according to the sixth embodiment.
Figure 17 is a diagram illustrating a logical structure of files and the like of a general IC card.
Figure 18 is a diagram illustrating the structure of a security attribute of a conventional IC card.
Figure 19 is a diagram illustrating an authentication procedure by a public key encryption method of a general IC card system.

### DETAILED DESCRIPTION OF THE PREFERRED EMBODIMENTS

Hereinafter, embodiments of the present invention will be described with reference to the drawings.

### (Embodiment 1)

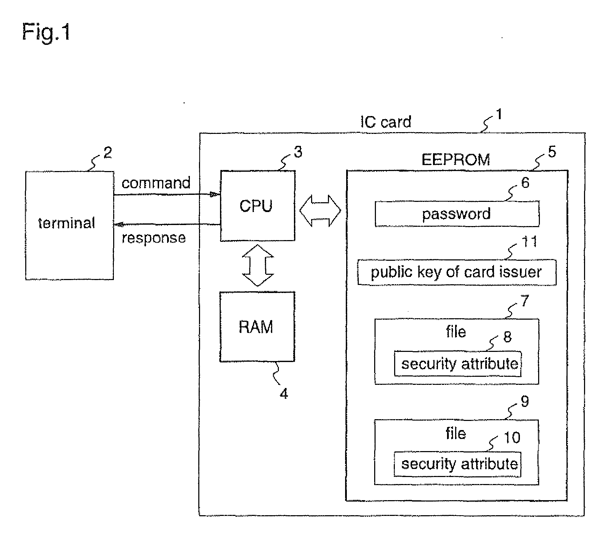

Figure 1 is a diagram illustrating the construction of an IC card system that executes an access control method according to a first embodiment of the present invention.

With reference to figure 1, reference numeral 1 denotes an IC card, and reference numeral 2 denotes a terminal that provides a service to a holder of the IC card 1. The IC card 1 comprises a CPU 3, a RAM 4, and an EEPROM 5. The CPU 3 conducts overall processings of the IC card 1 including transmission/reception of commands and responses with the terminal 2, access control, and the like. The RAM 4 is a volatile memory to be used for working. Further, the EEPROM 5 is a nonvolatile memory in which keys, files, and the like are stored.

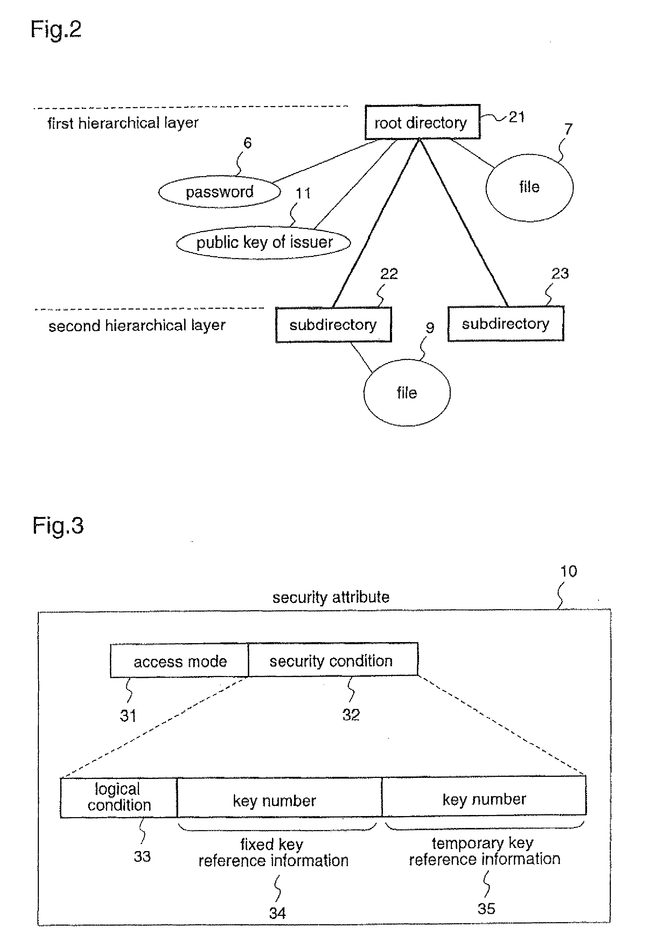

Figure 2 shows a logical structure of files stored in the EEPROM 5. While in figure 1 only keys and files are shown as elements stored in the EEPROM 5, actually information relating to directories and the like are stored. The directories are constituted in two hierarchical layers, and include a root directory 21 in the first hierarchical layer, and two subdirectories 22 and 23 in the second hierarchical layer. A password 6, a public key 11 of a card issuer, and a file 7 are stored directly below the root directory in the first hierarchical layer, and a file 9 is stored directly below the subdirectory 22 in the second hierarchical layer.

As shown in figure 1, security attributes 8 and 10 are set in the files 7 and 9, respectively. Hereinafter, access control for the file 9, i.e., access control for the security attribute 10, will be described. Figure 3 shows the structure of the security attribute 10 in the case where authentication of the card holder by the password 6 and authentication of the terminal 2 (to be precise, a service provider as an owner of application of the terminal 2) by the public key encryption method are requested as access conditions for reading data from the file 9.

As shown in figure 3, the security attribute 10 is composed of an access mode 31, and a security condition 32. In the access mode 31, information for identifying "read" that is the type of access to the corresponding file, for example, a command code of a read command, is stored. Further, in the security condition 32, information relating to the key to be authenticated in advance of execution of the access (read) specified in the access mode 31 is stored. In fixed key reference information 34, information for specifying the password 6 is stored.

In advance of describing these information, a key identification method according to the first embodiment will be described.

As ID information for the keys stored in the IC card 1, original key numbers are assigned to the respective keys. For example, sequence numbers starting from "1" are assigned, and a key number "1" is assigned to the password 6, and a key number "2" is assigned to the public key 11 of the card issuer as described later. As for the key numbers, numbers that do not overlap through the all hierarchical layers in the IC card are assigned regardless of the hierarchical layers of the directories.

In this first embodiment, initially, the key number "1" is stored as information for specifying the password 6 for authentication of the card holder is stored in the fixed key reference information 34.

Further, in this first embodiment, the key number assigned to the fixed key that is stored in the EEPROM 5 of the IC card 1 is virtually assigned to an insubstantial temporary key. To be specific, in this first embodiment, key numbers "6" to "8" are assigned to the temporary key. Although only the password 6 and the public key 11 are stored in the IC card 1 at this time, key numbers "3" to "5" are kept as spares considering that new keys will be additionally stored in the future. As described above, among the key numbers "6" to "8", "8" is stored in the temporary key reference information 35 as information for specifying the temporary key. Finally, AND logic is set in the logical condition 33.

The structure of the security attribute 10 indicates that both of collation of the password having the key number "1" and authentication by the temporary key having the key number "8" are required as the access conditions for reading data from the file 9.

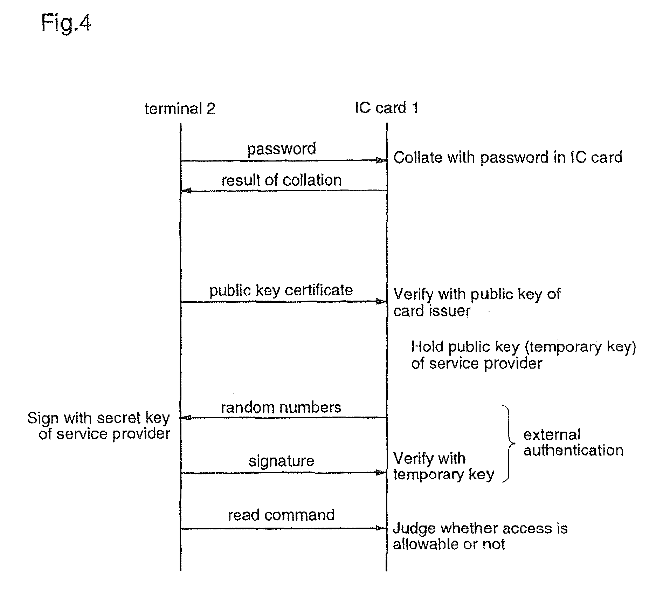

In this first embodiment, the access control is executed in the procedure shown in figure 4. Figure 4 shows the access control procedure for reading data from the file 9.

Initially, the terminal 2 which provides a service to the holder of the IC card 1 prompts the holder to input the password, and sends the password inputted to the terminal 2 to the IC card 1. The IC card 1 collates the password sent from the terminal 2 with the password 6 stored in the EEPROM 5, and holds the result in the RAM 4 and informs the result to the terminal 2.

When the collation of the password is successfully carried out, the terminal 2 sends its own public key certificate to the IC card 1. This public key certificate has previously been issued from the card issuer, and includes a signature to the public key of the service provider (in this case, terminal 2) by the secret key of the card issuer. Further, this public key certificate also includes a signature to the key number "8" that is assigned to the above-mentioned temporary key.

The IC card 1 has a public key that is paired with the secret key of the card issuer, and verifies, by using this public key, the signature included in the public key certificate that has been transmitted from the terminal 2. When this signature is valid, the IC card 1 takes the public key of the service provider from the public key certificate, and stores it as a temporary key in the RAM 4 of the IC card 1.

Next, the IC card 1 performs external authentication using the obtained temporary key. In this external authentication, the random numbers generated by the IC card 1 are sent to the terminal 2, and the digital signature made by the secret key of the service provider, which is returned from the terminal 2, is verified with the previously obtained temporary key, thereby confirming the validity of the terminal 2 (i.e., the service provider). When this external authentication succeeds, information of the key number "8" is stored in the RAM 4 as an evidence that the terminal 2 has an access authority corresponding to the key number "8".

Thereafter, on receipt of a read command for the file 9 from the terminal 2, the IC card 1 recognizes, from the contents of the security attribute 10, that collation of the password having the key number "1" as well as authentication by the temporary key having the key number "8" are requested as the access conditions for reading data, and judges that the access conditions are satisfied on the basis of the results of the above-mentioned collation and external authentication, and permits reading of data from the file 9.

As described above, in the first embodiment of the present invention, the key number assigned to the fixed key such as the password that is stored in the nonvolatile memory of the IC card is virtually assigned to the temporary key, and this key number is included in the public key certificate, and further, this key number is used in the security attribute for setting the access authority. Therefore, by specifying the information relating to the fixed key and the information relating to the temporary key in combination with each other, it is possible to perform access control comprising two different authentication methods, i.e., authentication by password collation or secret key encryption and authentication by public key encryption.

In the above description, different key numbers are assigned to the fixed key and the temporary key, respectively. In the above-mentioned example, if the IC card can know that the key numbers "1" to "5" are assigned to the fixed key while the key numbers "6" to "8" are assigned to the temporary key, the IC card can distinguish between the fixed key and the temporary key according to the key number. Therefore, the IC card does not need a special means for discriminating between the fixed key reference information 34 and the temporary key reference information 35, thereby providing simple and flexible construction of the IC card. A means for making the IC card learn the key number assignment information can be implemented by an implicit method (programmed in the CPU 3) or an explicit method (e.g., making the management information of the root directory have the key number assignment information).

Conversely, when the arrangement of the fixed key reference information 34 and the temporary key reference information 35 is fixed, the IC card can distinguish between the fixed key and the temporary key according to the storage positions of these information. Therefore, only overlapping of the key numbers between the fixed keys and between the temporary keys should be avoided, while the key number may be overlapped between the fixed key and the temporary key, leading to an increase in the number of keys that are available for access control.

Furthermore, in this method, when there is only one kind of terminal to be authenticated using the public key encryption method, it is not necessary to distinguish between plural temporary keys, and therefore, it is not necessary to assign a key number to the temporary key. In this case, the temporary key reference information 35 has empty information as a key number. However, the temporary key reference information 35 itself must be included in the security attribute 10 to indicate that the result of authentication by the public key encryption method is reflected to the access control.

Further, in order to implement the security attribute 10, various methods are considered. For example, while in the above-mentioned method one fixed key reference information and one temporary key reference information are provided, a plurality of fixed key (temporary key) reference information may be combined. Also in this case, the above-mentioned two methods, i.e., the method of assigning different key numbers to the fixed key and the temporary key and the method of fixing the storage positions of the fixed key reference information and the temporary key reference information, can be realized. Alternatively, as another method, identifiers may be added to the fixed key reference information and the temporary key reference information, respectively.

According to this method, the fixed key reference information and the temporary key reference information as many as desired can be provided, thereby realizing more flexible access control. Also in this case, since it is possible to distinguish between the fixed key and the temporary key by the identifier, the key numbers may overlap between the fixed key and the temporary key.

Also in this method, when there is only one kind of terminal to be authenticated by using the public key encryption method, the temporary key reference information 35 has empty information as a key number.

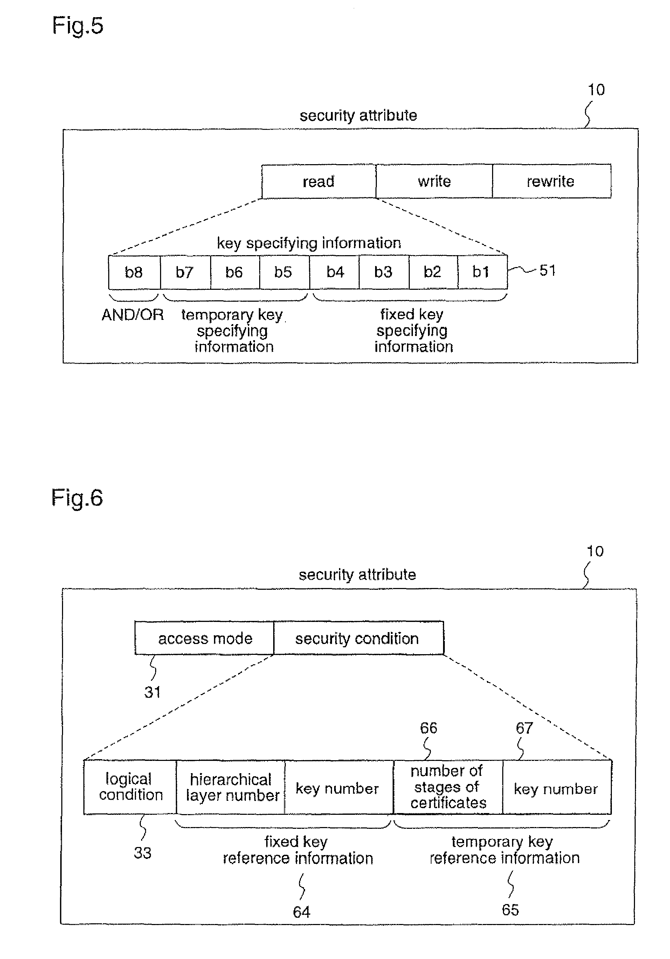

Furthermore, as another method for realizing the security attribute 10, for example, a construction shown in figure 5 is also applicable. In this method, one byte is assigned to each of a read command, a write command, and a rewrite command, and each command has key specification information 51. This key specification information 51 is information relating to a key which needs authentication to execute each command, and corresponds to the security condition 32 shown in figure 3. First to fourth bits (b1 to b4) and fifth to seventh bits (b5 to b7) are assigned to the fixed key specification information and to the temporary key specification information, respectively. The respective bits correspond to key numbers. For example, the fifth bit (b5) indicates that authentication of the key to which the key number "5" is assigned is required. Further, the most significant bit (b8) indicates the logical condition.

The same purpose as mentioned above can be achieved also by the security attribute of such construction.

Since the method of assigning key numbers and the modifications of security attributes, which are mentioned above, are the same as those of other embodiments mentioned hereinafter, repeated description is not necessary.

As described above, according to the access control method of the first embodiment, the key number assigned to the fixed key stored in the nonvolatile memory of the IC card is virtually assigned to the temporary key, and this key number is included in the public key certificate, and further, both of the key numbers of the fixed key and the temporary key are used in the security attribute for setting the access right. Therefore, the access condition is specified by combining the fixed key information and the temporary key information, whereby it is possible to perform access control comprising two different authentication methods, i.e., authentication using password collation or secret key encryption scheme and authentication using public key encryption scheme.

### [Embodiment 2]

An access control method according to a second embodiment of the present invention uses a method of referring keys corresponding to the hierarchical structure of files.

While in the first embodiment the key numbers that do not overlap throughout the hierarchical layers in the IC card are assigned regardless of the hierarchy of the directories, there are many cases where the key numbers are assigned so as not to overlap only directly beneath each directory, and overlapping of the key numbers is allowed for different directories. In this case, the key numbers can be assigned to each directory without concerning other directories. For example, when maximum 8 keys can be set directly beneath one directory, any of key numbers 1 to 8 is assigned to each fixed key. When the key numbers are assigned so as not to overlap each other directly beneath one directory, it is possible to uniquely specify each fixed key by combination of the hierarchical number and the key number.

More specifically, for example, when considering access control for the file 9 shown in figure 2, only the fixed keys located directly beneath the root directory 21 and the subdirectory 22, which directories are in the path starting from the root directory 21 to reach itself (file 9), become the targets, while the keys under the other directory (i.e., the subdirectory 23) is not the target. That is, if only the hierarchical number is specified, the target directory is uniquely determined. Accordingly, for example, when the second hierarchical layer is specified, since the subdirectory 22 becomes the target, key numbers are assigned so as not to overlap beneath this directory, whereby each fixed key can be uniquely specified by combination of the hierarchical number and the key number.

Figure 6 shows the structure of the security attribute 10 in the case where a fixed key is specified by combination of a hierarchical number and a key number. As shown in figure 6, fixed key reference information 64 is composed of a hierarchical number and a key number. An access mode 31 and a logical condition 33 are identical to those shown in figure 3.

Next, temporary key reference information 65 will be described. Since no temporary key exists in the EEPROM 5, the temporary key has no conception of "hierarchical numbers" in contrast to the fixed key. Instead of "hierarchical numbers", a conception of "number of stages of certificates" is introduced for the temporary key. Hereinafter, this conception will be described in detail.

Since the subdirectory 22 is positioned beneath the root directory 21, it is considered that the second service provider might access the file 9 directly beneath the subdirectory 22, under permission of the first service provider that manages the root directory 21. Although there are many cases where the card issuer also serves as the first service provider, it is assumed here that the first service provider exists besides the card issuer.

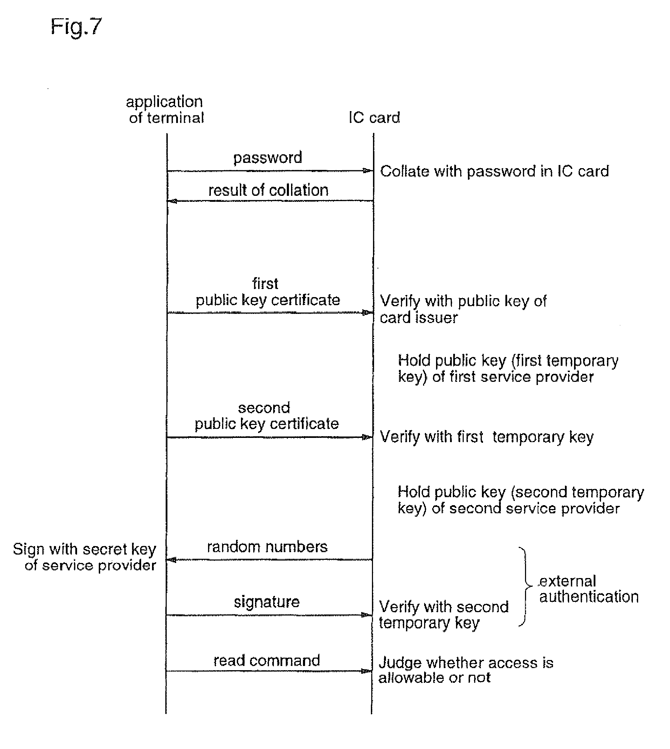

A description will be given of an access control procedure in the case where authentication of the card holder by the password 6 as well as authentication of the second service provider by the public key encryption method are requested as access conditions for reading data from the file 9, with reference to figure 7.

Figure 7 is a diagram illustrating the access control procedure when reading data from the file 9. Since inputting of the password of the holder of the IC card 1 is identical to that described for the first embodiment, repeated description is not necessary.

When collation of the password has been correctly performed, the terminal 2 sends the first public key certificate to the IC card 1. This first public key certificate has previously been issued from the card issuer, and includes a signature that is made for the public key of the first service provider by the secret key of the card issuer. The IC card 1 has a public key that is paired with the secret key of the card issuer, and verifies, using this public key, the signature included in the received first public key certificate. When this signature is valid, the IC card 1 takes the public key of the first service provider from the first public key certificate, and stores the public key as the first temporary key in the RAM 4 in the IC card 1.

Next, the terminal 2 sends the second public key certificate to the IC card 1. This second public key certificate has previously been issued from the first service provider, and includes a signature that is made for the public key of the second service provider by the secret key of the first service provider. The IC card 1 verifies the signature included in the received second public key certificate by using the first temporary key as the previously obtained public key of the first service provider. When this signature is valid, the IC card 1 takes the public key of the second service provider from the second public key certificate, and stores it as the second temporary key in the RAM 4 in the IC card 1.

Next, the IC card 1 performs external authentication using the obtained second temporary key, and performs access control using the result. Since the procedure of this external authentication is identical to that described for the first embodiment, repeated description is not necessary.

As described above, when the second service provider certifies its own validity, the two stages of public key certificates are used.

As described above, the first public key certificate is used by the card issuer to give an authority to the first service provider, and the second public key certificate is used by the first service provider to give an authority to the second service provider. Accordingly, it is possible to indicate that authentication of the second service provider by the public key encryption method is requested, by setting a value "2" that means the two stages of public key certificates in the number of stages of certificates 66 of the temporary key reference information 65 shown in figure 6.

Further, the key number that is assigned to the second temporary key is stored in the key number 67 of the temporary key reference information 65 shown in figure 6. As described for the first embodiment, the second public key certificate includes a signature for the key number assigned to the temporary key, and thereby it is ensured that the key number is not falsified.

When a value "1" is set in the number stages of certificates 66, it means a single stage of public key certificate, and authentication of the first service provider by external authentication using the first temporary key is required. The first public key certificate also includes the signature for the key number assigned to the first temporary key, and this key number is set in the key number 67.

In this way, since the conception of "number of stages of certificates" is introduced, the security structure corresponding to the hierarchical structure of the files of the IC card can be provided even in the case of performing authentication by the public key encryption method.

According to the access control method of the second embodiment, in the access control method according to the first embodiment, the key numbers are assigned so as not to overlap each other beneath each directory by using the key referring method corresponding to the hierarchical structure of files, particularly with introducing the conception of "number of stages of certificates" for the temporary key. Therefore, when performing access control comprising two different authentication methods, i.e., authentication using password collation or secret key encryption scheme and authentication using public key encryption, it is possible to provide a security structure corresponding to the hierarchical structure of the files in the IC card.

### [Embodiment 3]

An access control method according to a third embodiment of the present invention is devised so as to solve a problem in the access control method of the second embodiment that the second service provider cannot keep independence from the first service provider.

In the access control method of the second embodiment, since the second public key certificate is signed by the first service provider, the first service provider can forge the second public key certificate. That is, the first service provider can pretend to be the second service provider to read data from the file 9. Accordingly, when it is desired to prohibit the first service provider from reading the file 9, the access control method of the second embodiment is not suitable.

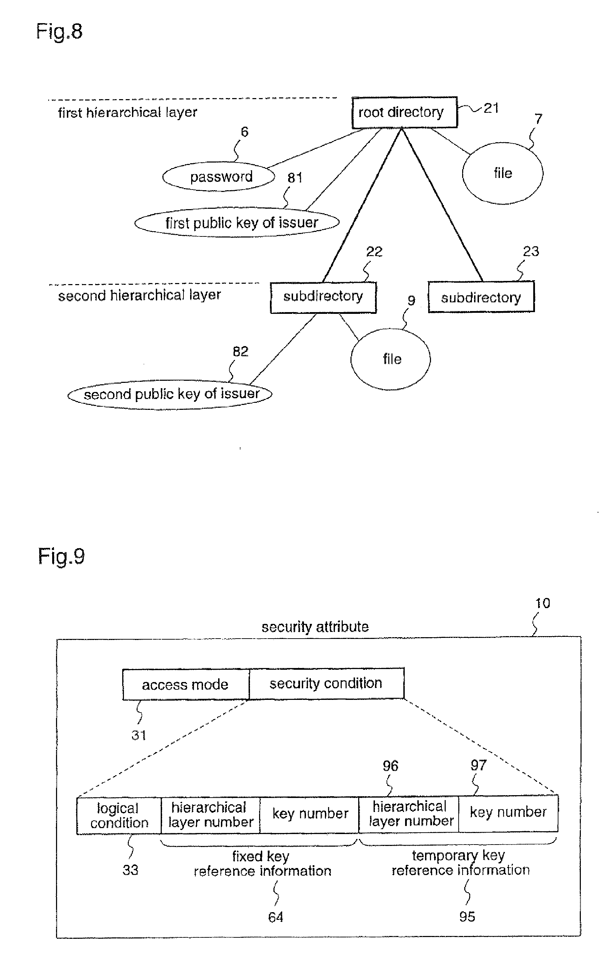

In order to solve this problem, the access control method according to the third embodiment adopts the following method. That is, a pair of a secret key and a public key for the card issuer is prepared for each hierarchical layer, and a public key of the card issuer is set in each hierarchical layer of the IC card as shown in figure 8. To be specific, when the directories are separated into two hierarchical layers, the first public key 81 of the issuer is set in the first hierarchical layer, and the second public key 82 of the issuer is set in the second hierarchical layer. Then, the first public key certificate including a signature that is made for the public key of the first service provider by the first secret key of the card issuer is issued from the card issuer to the first service provider. Likewise, the second public key certificate including a signature that is made for the public key of the second service provider by the second secret key of the card issuer is issued from the card issuer to the second service provider. The first secret key of the card issuer is paired with the first public key, and the second secret key is paired with the second public key. Further, as in the above-mentioned embodiments, a signature for the key number assigned to each temporary key is also included in each of the public key certificates.

Figure 9 shows the structure of the security attribute 10 in this case. The constituents other than temporary key reference information 95 are identical to those shown in figure 6. The hierarchical layer number of the directory where the public key of the issuer used for verification of the corresponding public key certificate is stored is set in a hierarchical layer number 96 in the temporary key reference information 95. That is, when the first service provider is permitted to make access, a value "1" is set in the hierarchical layer number 96. When the second service provider is permitted to make access, a value "2" is set in the hierarchical layer number 96. The key number assigned to the temporary key is stored in the key number 97.

According to the access control method of the third embodiment, a pair of a secret key and a public key for the card issuer are previously generated for each of the respective hierarchical layers, and the public key of the card issuer is set in each of the hierarchical layers of the IC card. In such construction, in order for the first service provider to impersonate the second provider, he has to have a signature that is made by the second secret key of the card issuer to the public key of the first service provider. However, since only the card issuer can generate this signature at that time, it is possible to prevent the impersonation by the first service provider. Likewise, it is also possible to prevent the second service provider from impersonating the first service provider.

### [Embodiment 4]

While in the first to third embodiments the security attributes are set in the files, it is also possible in the public key encryption method to specify an access type or a target file that is allowed for the service provider, in the public key certificate sent from the terminal. Thereby, the access authority to the file in the IC card can be changed by only changing the public key certificate. That is, it is not necessary to change the security attribute in the IC card, resulting in an operational advantage that there is no need to collect the IC card.

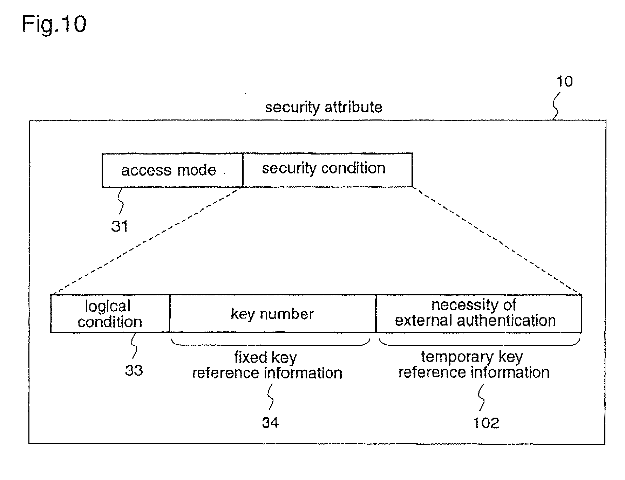

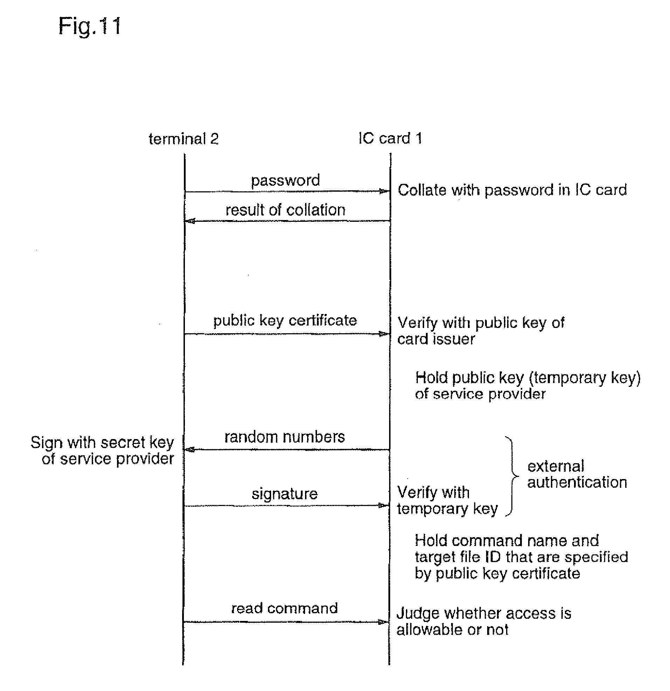

Hereinafter, the access control method according to the fourth embodiment of the present invention will be described with reference to figures 10 and 11.

In this fourth embodiment, it is premised that the construction of the IC card system and the logical structure of the file are identical to those shown in figures 1 and 2, as in the aforementioned embodiments. Further, it is premised that authentication of the card holder by the password 6 as well as authentication of the terminal 2 by the public key encryption system are required as the access conditions for reading data from the file 9, as in the aforementioned embodiments.

Figure 10 shows the structure of the security attribute of the file in the access control method according to the fourth embodiment, and the constituents other than the temporary key reference information 102 are identical to those of the first embodiment. Information indicating whether external authentication using the temporary key is required or not is set in temporary key reference information 102. For example, it is premised that external authentication is not required when a value "0" is set, and external authentication is required when a value "1" is set. In this fourth embodiment, it is assumed that a value "1" is set.

It is also possible to adopt an alternative method as follows. That is, when the temporary key reference information 102 exists, it means that that external authentication using the temporary key is required, and when the temporary key reference information 102 does not exist, it means that external authentication using the temporary key is not required.

Figure 11 shows the access control procedure in the access control method according to the fourth embodiment.

Since the fundamental process steps from password collation to external authentication are identical to those of the first embodiment, repeated description is not necessary. When the process steps up to external authentication are correctly carried out, the command name specified in the public key certificate, the identifier of the target file, and the like are stored in the RAM 4.

Thereafter, when the IC card 1 receives the read command to the file 9 from the terminal 2, the IC card recognizes, from the contents of the security attribute 10, that collation of the password having the key number "1" as well as authentication by the temporary key are requested as the access conditions for reading data, and initially, it checks the result of password collation and the result of external authentication. When both of them have succeeded, the IC card checks whether the read command is included in the command name stored in the RAM 4 and whether the file 9 is included in the target file. Only when both of them are included, the IC card determines that the access conditions are satisfied, and allows the terminal 2 to read data from the file 9.

Although in the above description the logical condition 33 is AND logic, when it is OR logic, reading of the file is allowed if one of the password collation and the external authentication using the temporary key has succeeded.

In this way, the information indicating whether the authentication result by the public key encryption method is reflected to access control or not is included in the security attribute, whereby the IC card can flexibly respond to a change in the access authority relating to the authentication using the temporary key.

Hereinafter, the public key certificate of the fourth embodiment will be described in detail.

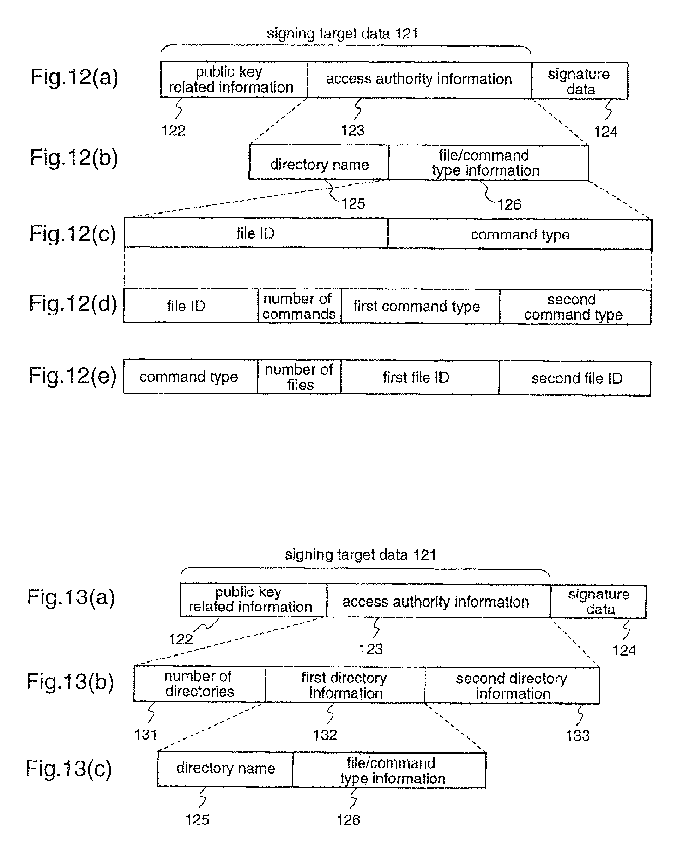

Figure 12 is a diagram illustrating the structure of the public key certificate of the fourth embodiment.

In public key related information 122, ID information of a signatory, signature algorithm, expiration date, are stored in addition to the public key of the service provider. Signature data 124 is obtained by signing signature target data 121 comprising the public key related information 122 and access authority information 123 to be described later, by using the secret key of the card issuer (refer to figure 12(a)).

The access right information 123 comprises directory name 125, and file/command type information 126 (refer to figure 12(b)).

Initially, the file/command type information 126 will be described. The simplest structure of the file/command type information 126 is obtained by combining a file ID and a command type as shown in figure 12(c). For example, in the public key certificate of the service provider having read authority for the file 9, the file name of the file 9 is set as the file ID and the command code of the read command is set as the access type.

When the service provider has access authorities for plural files and plural access types, since the method of simply combining the file IDs and the access types results in poor transmission efficiency, a method shown in figure 12(d) or 12(e) is proposed. Figure 12(d) shows a method of connecting plural command types to one file ID, and this method is effective when plural accesses (e.g., read and write) are allowed for one file. On the other hand, figure 12(e) shows a method of connecting plural file IDs to one command type, and this method is effective when one access method (e.g., read) is allowed for plural files.

The directory name 125 is for identifying each directory (root directory or subdirectory). Generally, a file ID is independently assigned to each directory, and the same file identifier often exists directly beneath different directories. Accordingly, when the public key certificate has no directory name 125, the public key certificate targeted to a certain directory can be diverted to another directory, resulting in a security problem. This problem can be solved by including the directory name 125 in the public key certificate so that the directory name 125 becomes a target of signing by the card issuer.

When the directory name 125 included in the public key certificate is different from the currently selected directory, the IC card regards it as an error. When another directory is selected, the temporary key, the command name, and the identifier of the target file, which are stored in the RAM 4 shown in figure 11, are erased.

Although the method of preparing a public key certificate for each directory has been described, when the service provider is afforded access authorities for plural directories (e.g., the root directory 21 and the subdirectory 22 in figure 2) which are positioned on one branch and have relationships such as parent-child and their descendants, if these directories can be put together in one public key certificate to be sent to the IC card 1, the transmission efficiency can be further enhanced.

The construction of the public key certificate which can realize the above-mentioned method is shown in figure 13. Figure 13 shows the case where information relating to two directories is included in the public key certificate. In this way, the access authority information 123 includes the number of directories 131, the first directory information 132, and the second directory information 133, and the first directory information 132 and the second directory information 133 are respectively constituted by the directory name 125 and the file/command type information 126 which are explained with reference to figure 12.

Hereinafter, processings to be performed by the IC card 1 when the IC card 1 receives a public key certificate having a plurality of directory information will be described with reference to the file construction shown in figure 2.

When the currently selected directory is the root directory 21, all the directories in the IC card are child directories. Therefore, if the directory name shown in the public key certificate exists in the IC card, it is regarded as "normal" (when it does not exist, "error"), and the command name and the identifier of the target file which are shown by the file/command identification information 126 of the corresponding directory are stored in the RAM 4 as information corresponding to the hierarchical layer number of the corresponding directory. This processing is repeatedly performed for the plural directories (in the case of two hierarchical layers, two directories at most) included in the public key certificate. However, if the subdirectory that is not included in the public key certificate is selected thereafter, the information corresponding to the second hierarchical layer is discarded from the information stored in the RAM 4.

On the other hand, when the currently selected directory is the subdirectory 22, if the directory name shown in the public key certificate is its own name or the name of the root directory 21 as a parent directory, it is regarded as "normal" (otherwise, "error"), and the command name and the identifier of the target file which are indicated by the file/command identifier information 126 corresponding to this directory are stored in the RAM 4 as the information corresponding to the hierarchical layer number of this directory. This processing is repeatedly performed to the plural directories (in the case of two hierarchical layers, two directories at most) included in the public key certificate. Thereafter, when the root directory 21 or the next subdirectory 23 is selected, the information corresponding to the second hierarchical layer is discarded from among the information stored in the RAM 4.

While in the above description the hierarchical structure of files comprises two hierarchical layers, even when there are three or more hierarchical layers, similar processing according to the above description will be carried out. To be specific, when the directory name shown in the public key certificate exists on a branch that connects the root directory and the currently selected directory or it is a descendant of the currently selected directory, it is regarded as "normal" and the usual processing is carried out, and the information corresponding to the n-th hierarchical layer is discarded from among the information stored in the RAM 4 at the timing when the n-th hierarchical layer directory that is different from the directory shown in the public key certificate is selected. In this case, if the information corresponding to the (n+1)th hierarchical layer and subsequent layers are stored in the RAM 4, these information are also discarded simultaneously.

Various methods other than mentioned above may be adopted, for example, information relating to directories beneath its own directory may be discarded at the timing when the public key certificate is received.

According to the above-described access control method of the fourth embodiment, in the aforementioned first to third embodiments, the access type and the target file which are allowed for the service provider are specified in the public key certificate that is sent from the terminal. Therefore, the access authority to the file in the IC card can be changed by only changing the public key certificate, thereby dispensing with the necessity of changing the security attribute in the IC card, leading to an operational advantage that it is not necessary to collect the IC card.

### [Embodiment 5]

An access control method according to a fifth embodiment of the present invention enables recording of the number of collation errors also in the case of performing authentication by public key encryption, as in the case of performing authentication by password collation or secret key encryption. In the case of using the fixed key such as a password, the key itself can have information relating to the number of collation errors. However, in the case of using the temporary key, since it does not exist in the nonvolatile memory, a method of managing the number of collation errors in the directory is adopted.

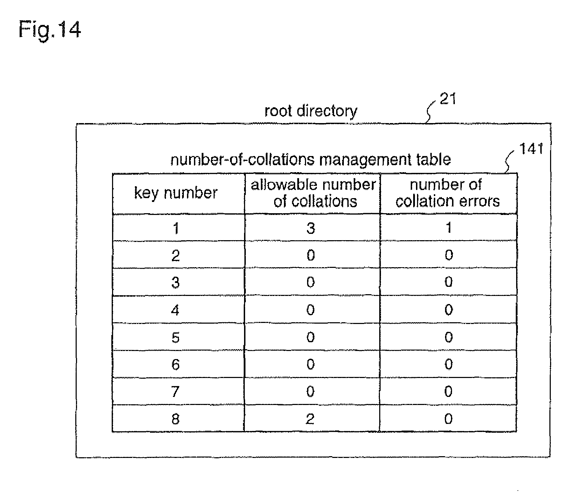

Hereinafter, a method corresponding to the security attribute in the access control method of the fifth embodiment will be described with reference to figure 14. In the following description, parts noted as "collation" mean either "collation" or "authentication".

Figure 14 is a diagram illustrating the structure of a number-of-collations management table which is included in the root directory 21 in the access control method of the fifth embodiment. The number-of-collations management table 141 includes the allowable number of collations and the number of collation errors for each key number.

The allowable number of collations indicates how many consecutive collation errors can be allowed. Further, the number of collation errors indicates the number of times collation fails continuously, and it is incremented every time collation fails, and cleared to a value "0" when collation succeeds. When the number of collation errors reaches the allowable number of collations, the corresponding key is blocked up.

Since the key number "1" is assigned to the password 6 as described for the first embodiment, a row corresponding to the key number "1" in the number-of-collations management table 141 indicates information relating to the password 6. In this row, the allowable number of collations is set to 3, and collation fails one time. Although the key number "2" is assigned to the public key 11 of the card issuer, since this key is not a target of management for the number of collations, a value "0" indicating "unused" is set in the field of the allowable number of collations. Further, key numbers "3" to "7" are also unused currently, a value "0" is set in the field of the allowable number of collations. Since the key number "8" is assigned to the temporary key, the number of authentication errors by the public key encryption method is managed in the row corresponding to the key number "8". In this example, it is shown that up to two times of authentication errors are allowed.

As described above, in the fifth embodiment of the invention, since all the keys are managed in the entire IC card, the number-of-collations management table is managed in the root directory 21.

On the other hand, since management of keys is performed for each directory in the second to fourth embodiments, each directory has the number-of-collations management table.

That is, in the second embodiment, when the number of stages of certificates is "1", the number-of-collations management table of the root directory 21 is referred to. When the number of stages of certificates is "2", the number-of-collations management table of the subdirectory 22 is referred to.

Further, in the third embodiment, in authentication using the first public key certificate, the number-of-collations management table of the root directory 21 is referred to. In authentication using the second public key certificate, the number-of-collations management table of the subdirectory 22 is referred to.

Further, in the fourth embodiment, when the public key certificate includes the directory name of the root directory 21, the number-of-collations management table of the root directory 21 is referred to. When the public key certificate includes the directory name of the subdirectory 22, the number-of-collations management table of the subdirectory 22 is referred to.

As described above, according to the fifth embodiment, by making the directory have a number-of-collations management table corresponding to each key number, the target key can be identified by the key number, and thereby management of the number of collations for each temporary key is realized. Further, by specifying the key number with the parameter of the unblocking command, a function of unblocking the temporary key can be realized.

In the fourth embodiment, since the information relating to the key number of the temporary key is not included in the temporary key reference information 102, the key number is not always necessary in the public key certificate. However, when the number of collations is to be managed, the key numbers are included in the public key relevant information of the public key certificate.

### [Embodiment 6]

In an access control method according to a sixth embodiment of the present invention, the conception of the public key certificate which gives the access authority information from the outside to the IC card is also applied to authentication by password collation or secret key encryption. Thereby, an operational advantage that the access condition can be changed without collecting the IC card is obtained with respect to the authentication by password collation or secret key encryption.

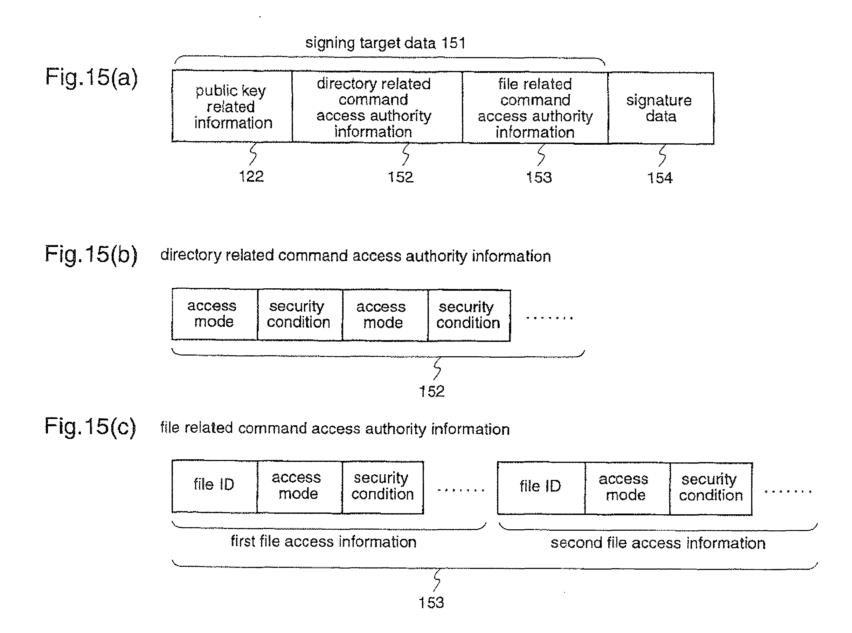

The construction of the public key certificate according to the sixth embodiment for realizing the above-mentioned advantage is shown in figure 15. With reference to figure 15, public key related information 122 is identical to that shown in figure 12, and a public key of a service provider, ID information of signatory, signature algorithm, expiration date, and the like are stored in the public key related information 122. Further, the public key certificate also includes a key number of a temporary key. Signature target data 151 comprising the public key related information 122, and directory related command access authority information 152 and file related command access authority information 153, which are described later, are signed with a secret key of a card issuer, thereby obtaining signature data 154.

The directory related command access authority information 152 is access authority information relating to a command (e.g., updation of directory name or creation of file) to a currently selected directory, and it is composed of plural pairs of access modes and security conditions as shown in figure 15(a). The access mode and the security condition have the same information as the security attribute 10 described for the first to third embodiments, and also include information relating to the temporary key.

The file related command access authority information 153 has a similar construction to that of the directory related command access authority information 152. When there are plural files directly beneath the currently selected directory, file access information as many as the number of files are connected as shown in figure 15(c). Each file access information comprises a file ID for identifying a file, and plural pairs of access modes and security conditions. The access mode and the security condition have the same information as the security attribute 10 described for the first to third embodiments, and also include information relating to the temporary key.

In both cases of the directory-related command access authority information 152 and the file-related command access authority information, the pairs of access modes and security conditions as many as the number of commands which can be used by the terminal that transits this public key certificate are connected. A command that is not specified here is not allowed for the terminal to execute.

As described above, the information relating to the security attribute, which has conventionally been stored in the nonvolatile memory of the IC card, is included in the public key certificate, and transmitted from the terminal to the IC card, whereby the IC card system can flexibly responds to a change in the access authority relating to authentication by password collation or secret key encryption.

Although it is operationally convenient that the access authority to the IC card can be freely changed by changing the public key certificate, the public key certificate that can be externally given to the IC card is likely to be a target for attack, and holds a danger of exposing vulnerability on security. Accordingly, it is desirable to take some countermeasure for preventing this problem on the IC card side.

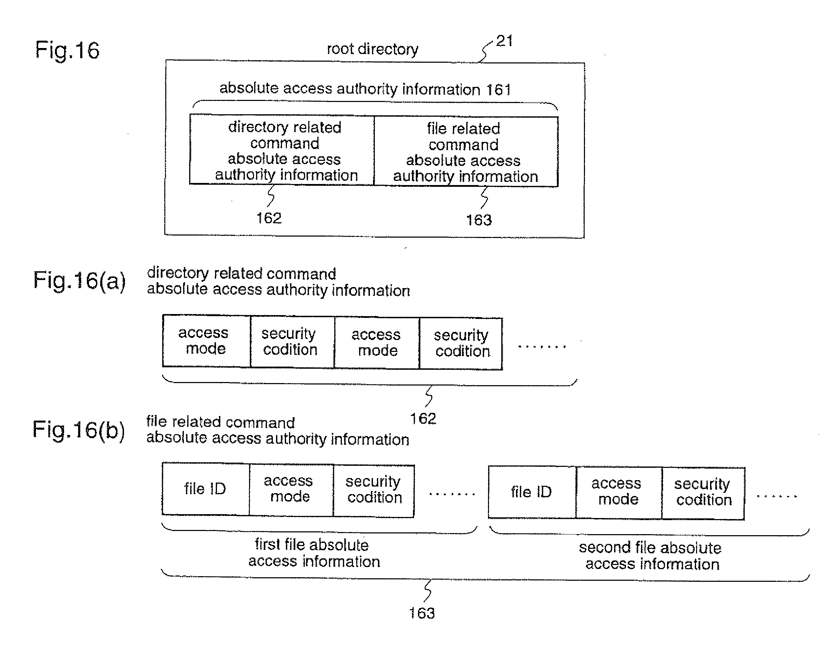

Figure 16 is a diagram illustrating an example of such countermeasure according to the sixth embodiment, wherein each directory has an absolute access authority information 161. While figure 16 shows the case of the root directory 21, the subdirectory also has similar information. The absolute access authority information comprises directory-related command absolute access authority information 162, and file-related command absolute access authority information 163. The directory-related command absolute access authority information 162 has the same construction as the directory-related command access authority information 152 shown in figure 15. Likewise, the file-related command absolute access authority information 163 has the same construction as the file-related command access authority information 153 shown in figure 15.

The directory-related command absolute access authority information 162 is an absolute access condition, and it has a priority over the directory-related command access authority information 152 included in the public key certificate. That is, whatever access condition is presented in the directory-related command access authority information 152 of the public key certificate, the IC card performs access control according to the directory-related command absolute access authority information 162 included in the currently selected directory.

When the directory-related command absolute access authority information 162 does not exist in the currently selected directory, the directory-related command access authority information 152 of the public key certificate becomes valid. Conversely, when the directory-related command absolute access authority information 162 exists, the directory-related command access authority information 152 of the public key certificate becomes invalid.

The same can be said for the file-related command absolute access authority information 163.

As described above, according to the access control method of the sixth embodiment, since the absolute access authority information is stored in the IC card, even when the public key certificate including the access authority information is forged, necessary security can be achieved.

While in the above description the absolute access authority information is possessed by each directory, the file-related command absolute access authority information 163 may be possessed by not the directory but each film.

### [Applicability in Industry]

The method according to the present invention is useful in a system that performs access control to a file or the like stored in an IC card.

## Claims

1. An access control method for controlling access to a file in an IC card, wherein
said IC card has a fixed key in a nonvolatile memory;
a terminal sends, to the IC card, a public key certificate in which its own public key is signed by a secret key of a card issuer;
said IC card verifies the validity of the public key certificate received from the terminal, and thereafter, takes the public key out of the public key certificate, and stores the public key as a temporary key in a volatile memory in the IC card;
a file in the IC card has fixed key reference information for referring to the fixed key, and temporary key reference information for referring to the temporary key; and
said IC card judges whether access to the file in the IC card is allowable or not, on the basis of at least the fixed key reference information, and the temporary key reference information.

2. An access control method as defined in Claim 1 wherein
said public key certificate includes a first key number that is virtually assigned to the temporary key; and
a result of authentication using the temporary key is referred to according to the first key number stored in the temporary key reference information.

3. An access control method as defined in Claim 2 wherein
a second key number is assigned to the fixed key;
a result of authentication using the fixed key is referred to, according to the second key number stored in the fixed key reference information; and
different values are assigned to the first key number and the second key number, respectively, thereby discriminating the fixed key and the temporary key from each other.

4. An access control method as defined in Claim 2 wherein
a second key number is assigned to the fixed key;
a result of authentication using the fixed key is referred to according to the second key number stored in the fixed key reference information; and
the storage positions of the fixed key reference information and the temporary key reference information are fixed, thereby discriminating the fixed key and the temporary key from each other.

5. An access control method as defined in Claim 2 wherein
a second key number is assigned to the fixed key;
a result of authentication using the fixed key is referred to according to the second key number stored in the fixed key reference information; and
different identifiers are assigned to the fixed key reference information and the temporary key reference information, respectively, thereby discriminating the fixed key and the temporary key from each other.

6. An access control method as defined in any of Claims 1 to 5 wherein
the file in the IC card as a hierarchical structure; and
the temporary key reference information has information relating to the number of stages of the public key certificate.

7. An access control method as defined in any of Claims 1 to 5 wherein
the file in the IC card as a hierarchical structure; and
the temporary key reference information has information relating to hierarchical layer numbers of the hierarchical structure.

8. An access control method as defined in Claim 1 wherein
the temporary key reference information includes information indicating whether an authentication result obtained by a public key encryption method should be reflected to access control or not.

9. An access control method as defined in Claim 8 wherein
the public key certificate has directory identification information; and
said IC card performs normal processing when the currently selected directory is a directory that is indicated by the directory identification information in the public key certificate.

10. An access control method as defined in Claim 8 wherein
the public key certificate has a plurality of directory identification information; and
said IC card performs normal processing when a directory which is indicated by each of the plural directory identification information is a directory that is positioned on a branch connecting a root directory and the currently selected directory.

11. An access control method as defined in Claim 8 wherein
the public key certificate has a plurality of directory identification information; and
said IC card performs normal processing when a directory which is indicated by each of the plural directory identification information is a directory that is positioned on a branch connecting a root directory and the currently selected directory, or a descendant of the currently selected directory.

12. An access control method as defined in Claim 8 wherein
the public key certificate has one file identification information to which a plurality of command identification information are connected.

13. An access control method as defined in Claim 8 wherein
the public key certificate has one command identification information to which a plurality of file identification information are connected.

14. An access control method as defined in Claim 1 wherein
the public key certificate includes a first key number that is virtually assigned to the temporary key; and
at least one directory stored in the IC card has number-of-collations management information corresponding to the first key number.

15. An access control method for controlling access to a file in an IC card wherein
said IC card has a fixed key in a nonvolatile memory;
a terminal sends, to the IC card, information which is obtained by signing access control information for referring to the fixed key; and
said IC card verifies the validity of the signed information that is received from the terminal, and thereafter, takes the access control information from the signed information, and judges whether access to the file is allowable or not, on the basis of at least the access control information.

16. An access control method as defined in Claim 15 wherein
said IC card has absolute access authority information stored in the nonvolatile memory; and
access control is carried out on the basis of the absolute access authority information with a priority over the access control information.

17. An IC card including a CPU, a volatile memory, and a nonvolatile memory, wherein
said nonvolatile memory has a file and a fixed key;
said CPU verifies the validity of a public key certificate received from a terminal, and thereafter, takes a public key out of the public key certificate, and stores it as a temporary key in the volatile memory;
said file has fixed key reference information for referring to the fixed key, and temporary key reference information for referring to the temporary key; and
said CPU judges whether access to the file is allowable or not, on the basis of at least the fixed key reference information and the temporary key reference information.

18. An IC card as defined in Claim 17 wherein
said temporary key has a key number that is virtually assigned to it, and
said CPU verifies the validity of a key number included in the public key certificate, and refers to a result of authentication that uses the temporary key, according to the key number stored in the temporary key reference information.

19. An IC card as defined in Claim 17 wherein
said CPU performs access control by using information indicating whether a result of authentication by a public key encryption method, which is stored in the temporary key reference information, should be reflected to access control or not.

20. An IC card as defined in Claim 17 wherein
said temporary key has a key number that is virtually assigned to it; and
said CPU verifies the validity of a key number included in the public key certificate, and manages the number of collations of the temporary key on the basis of information corresponding to this key number, which information is included in at least one directory possessed by the public key certificate.

21. An IC card having a CPU, a volatile memory, and a nonvolatile memory, wherein
said nonvolatile memory has a file and a fixed key; and
said CPU verifies the validity of information that is obtained by signing access control information for referring to the fixed key, which information is received from a terminal, and thereafter, takes out the access control information, and judges whether access to the file is allowable or not according to at least this access control information.
